# EUROPEAN PATENT APPLICATION

(11) **EP 0 703 044 A1**
(43) Date of publication of application: **27.03.1996**
(21) Application number: 95306170.2
(22) Date of filing: 04.09.1995
(51) Int. Cl.: B25G 1/04, B25G 1/06

(54) **Adjustable connection**

(30) Priority: 02.09.1994 GB 9417851
(71) Applicant: GOBLIN LIMITED, Normanton, West Yorkshire WF6 1TT (GB)
(72) Inventor: Lynn, Geoffrey, Selby N.Yorkshire YO89PE (GB)
(74) Representative: Moir, Michael Christopher

(57) **Abstract**

A string trimmer has a handle (1) of adjustable length. The handle (1) is in two relatively rotatable telescopic sections (14,16), enabling the work head (2) to be reversed relative to the hand grips (8,10) for edging. The handle sections (14,16) are located by a stud (32) on one section engaging longitudinal and circumferential grooves on the other defined by a series of plates (40,42,44,46,48) having shaped apertures therein. Depression of a push button (18) disengages a stud (56) carried by a saddle (52) in one section from a transverse bore in the other section to permit relative rotational and longitudinal movement.

## Description

The present invention relates to an adjustable connection between two parts of an elongate shaft. It has particular utility in the field of hand tools, e.g. string trimmers, for adjusting the length of the handle of the trimmer or the orientation of the trimmer head in a single operation. The invention also embraces a hand tool including a shaft which comprises an adjustable connection in accordance with the present invention.

One problem with many commercially available string trimmers is that it is not possible to move conveniently and easily the trimmer head from a horizontal cutting position to an edging position closer to the vertical. In practice, this is typically achieved by manipulating the whole trimmer such that it is held in a position suitable for "edging". It will be appreciated however that in such a position, the trimmer is not being held in the manner for which it was designed; the trimmer is difficult to hold in such a position for extended periods of time, and such use of the apparatus typically involves a significant risk of the work head impinging on and damaging the trimmer flex. This constitutes a serious hazard to the user.

Another problem common to all string trimmers which are currently commercially available is that it is not possible to adjust the length of the handle of the trimmer and the orientation of the trimmer head in a single operation.

Another problem relates to means for providing an adjustable connection between two parts of an elongate shaft. In order to provide the possibility of changing the relative orientation or relative longitudinal position of the two parts of the shaft and provide a rigid connection between the two parts of the shaft once that adjustment has been made, a resilient interengaging means is often provided between the two parts of the shaft. However, when an adjustment is made a problem often arises in that the interengagement means accidentally engages before the two parts of the shaft have been moved to their desired positions. In addition, problems are often encountered in ensuring that once the desired adjustment has been made that the interengagement means interengage the two parts of the shaft. This results in the user having to make numerous minor adjustments to the relative orientation and relative longitudinal positions of the two parts of the shaft before the interengagement means interengage the two parts of the shaft.

The present invention at least in its preferred embodiments is intended to overcome some or all of the above problems.

According to a first aspect of the present invention there is provided a hand tool having an adjustable connection between a first elongate handle part and a second coaxial elongate handle part, said connection being for maintaining the concentricity of the two parts whilst enabling relative longitudinal and rotational movement of the two parts, and comprising release means selectively operable to enable or prevent said relative movement;
one of said elongate parts including a male member provided with a guiding protrusion;
the other of said elongate parts being provided with a series of longitudinally spaced plates, each of said plates having a shaped aperture, the space between adjacent plates providing a lateral guide within which said guiding protrusion turns about the longitudinal axis during said relative rotation, said shaped aperture providing a longitudinal guide within which said guiding protrusion is constrained to travel during said relative longitudinal movement.

The longitudinal guide may be such that one of said handle parts is rotated relative to the other of said handle parts to align said guiding protrusion with said longitudinal guide to enable relative longitudinal movement.

The release means may comprise an engagement means attached to said other of said elongate members and a plurality of longitudinally spaced engageable means provided on said male member.

The longitudinal guide may be such that said engagement means cannot engage said plurality of longitudinally spaced engageable means during said relative longitudinal movement.

Preferably said plurality of longitudinally spaced engageable means comprises a plurality of spaced lateral bores extending through said male member. This arrangement has the advantage that two sets of engageable means are provided on opposite sides of the male member.

The release means may comprise a saddle extending around the male member and comprising on one side a push button and on the other side said engagement means, depression of the push button radially inwardly of the male member causing radially outward movement of the engagement means and disengagement thereof from the engageable means.

The hand tool may further comprise an operating head fixed for rotation with one said handle part, and defining a plane of operation of the apparatus, said one handle part being oblique to said plane of operation;
the other handle part having thereon hand grip means for manipulation of the hand tool;
said adjustable connection allowing said handle parts to be moved longitudinally relative to each other, whereby to vary the distance between the hand grips and the operating head.

The hand grip may comprise a hand grip means comprises a hand grip for each hand of the operator.

The hand grips may be in fixed spatial relation to each oher.

According to another aspect of the present invention, there is provided an adjustable connection between a first elongate member and a second coaxial elongate member, said connection being for maintaining the concentricity of the two members whilst enabling adjustment of the relative longitudinal position and the relative orientation of the two members, wherein:
said connection comprises an interengagement means comprising an engagement means attached to one of said members and a plurality of longitudinally spaced engageable means being provided on the other of said members;
a longitudinal guide means for allowing relative longitudinal movement only when the engagement means is circumferentially spaced from said engagable means; and
a lateral guide means for allowing relative rotation only when both said engagement means and said engageable means are at a position where relative rotation will result in interengagement between said engagement means and said engageable means;
the arrangement being such that the first and second elongate members can be rotated relative to each other until the relative orientation is such that the longitudinal guide means allows relative longitudinal movement, the longitudinal guide means ensuring that the interengagement means cannot hinder said longitudinal movement, and on the desired length being obtained, the lateral guide means ensuring that relative rotation between said first and second members is only possible where the engagement means and the engageable means are located at the same longitudinal position.

In a different aspect there is provided a hand tool (eg. a string trimmer) including a handle which comprises an adjustable connection in accordance with the invention.

In another aspect there is provided a hand tool comprising:
an elongate handle including a first handle part having an operating head fixed for rotation with said first handle part, and defining a plane of operation of the apparatus, said first part of said handle being oblique to said plane of operation;
a second handle part having thereon hand grip means for manipulation of the hand tool;
a connection connecting said first handle part and said second handle part and for allowing said first and second handle parts to be turned about the longitudinal axis of the handle relative to each other, which connection comprises a release means selectively operable to enable or prevent said relative rotation;
the arrangement being such that the release means may be operated and the first handle part turned about the axis of the handle relative to the second handle part, the relative orientation of the plane of operation of the apparatus and the second handle part thereby being altered;
said connection allowing said first and second handle parts to be moved longitudinally relative to each other, whereby to vary the distance between the hand grips and the operating head.

Specific embodiments of the present invention will now be described by way of example only with reference to and as illustrated in the following drawings, in which:

Fig 1A is a diagrammatic perspective view of the string trimmer of the embodiment being used in a horizontal cutting position.

Fig 1B is a diagrammatic perspective view of the string trimmer of the embodiment being use in an edging position.

Fig 2 is a diagrammatic part-sectional perspective view of the connection between the upper and lower handle parts of the string trimmer in an initial position.

Fig 3 is a view similar to Fig 2 showing the connection in a intermediate position

Fig 4 is a view similar to Figs 2 & 3 but showing the connection between the upper and lower handle parts in a final position.

A hand tool in accordance with the present invention comprises a handle part (shown generally at 1) having a first end and a second end. Said second end carries an operating head (shown generally at 2). The invention is described herein with reference to a string trimmer, but it will be appreciated that the invention can be applied to any hand tool comprising a handle and a workhead.

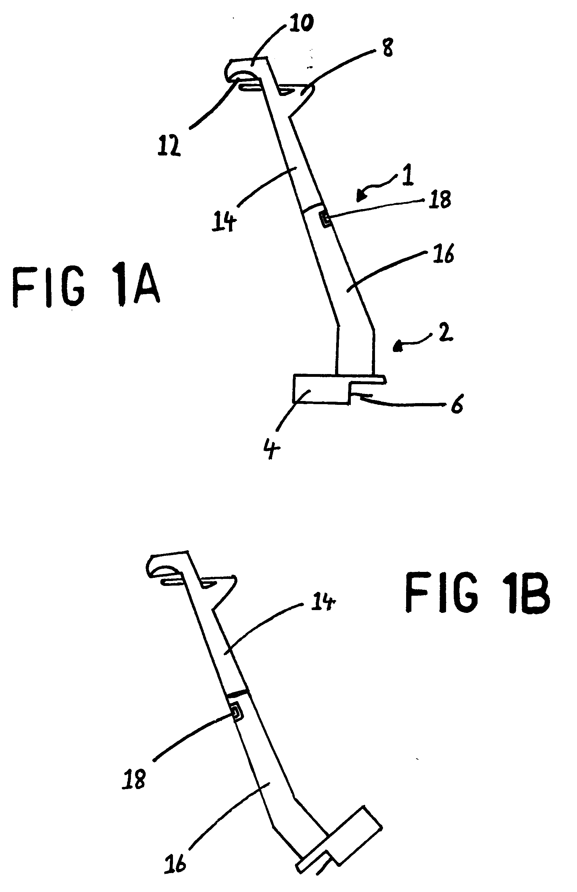

The operating head of the specific embodiment comprises a body section 5 which houses a motor (not shown) which when driven causes the rapid rotation of a string 6 which serves to cut any grass in its plane of rotation. In its position as shown in Figure 1A, the plane of operation of the string trimmer is substantially horizontal. The operating head further comprises a guard plate 4 to reduce the chances of a user of the trimmer being injured.

The handle means 1 is orientated generally obliquely to the plane of operation of the string trimmer. The top of the handle means 1 is to be disposed rearwardly of the operating head shown generally at 2.

A first hand grip 10 is formed integrally with the handle means 1 and projects rearwardly from the top of the handle means 1. On the underside of the handle 10 there is provided an actuating switch 12 which be squeezed to activate the motor. In addition, a second hand grip in the form of a side-arm 8 is provided in fixed relationship to the hand grip 10 at a position towards the top of the handle means 1 and projects to one side of the handle means 1. Hence, by holding the hand grip 10 and the side-arm 8 the user is able to control the movement of the operating head 2.

The handle means 1 is divided lengthwise at a position intermediate its uppermost and lowermost ends into an upper handle part 14 and a lower handle part 16. A button 18 is provided in the lower handle part 16 which when pressed enables the upper handle part 14 both to rotate relatively to the lower handle part 16 and also to move longitudinally thereto.

Hence, as can be seen from Figure 1B, the string trimmer of the present embodiment may be moved to an edging position by rotating the lower handle part 16 by 180 degrees relative to the upper handle part 14. In addition, the overall length of the handle means 1 can be adjusted to a desired length.

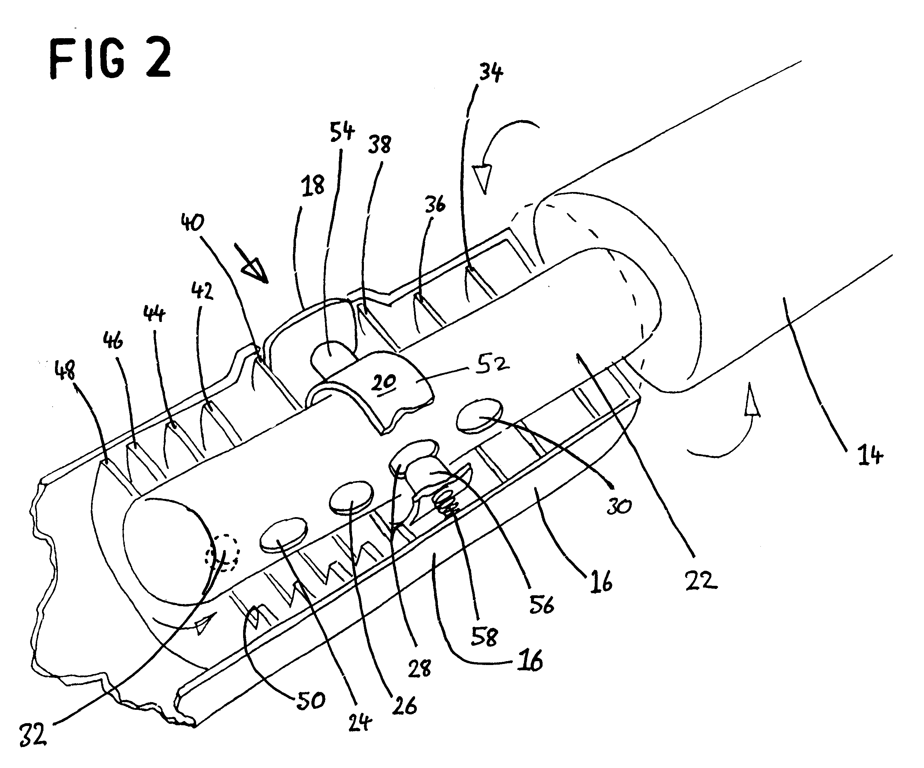

The connection between the upper handle part 14 and the lower handle part 16 will now described in detail with reference to Figures 2,3 & 4. Turning firstly to Figure 2, the connection mechanism can be seen to comprise three principal parts, namely the upper handle part 14, the lower handle part 16, and a release means 20.

The upper handle part 14 provides the male part of the connection and comprises a elongate tube of elliptical cross-section which has an elongate hollow cylindrical member 22 extending longitudinally from its lower end. The cylindrical member 22 has a diameter of approximately half of the minor diameter of the elliptical cross-section of the elongate tube. The lowermost end of the hollow cylindrical member 22 is closed. Four lateral bores 24,26,28,30 are provided in the hollow cylindrical section 22 and these are spaced at regular intervals along the length of the hollow cylindrical member 22. A protruding stud 32 extends radially from the side of the hollow longitudinal cylinder 22 at a position adjacent to the lower end of the hollow cylinder 22. The stud 32 extends in a radial direction at 90° to the line of the four bores 24, 26, 28, 30. The hollow cylinder 22 is located inside the uppermost end of the lower handle part 16.

The upper part of the handle part 16 is formed substantially of a tube of similar elliptical cross-section to the upper handle part 14. This tube is closed at its uppermost end except for a bore being provided along the axis of the tube, that bore being of sufficient diameter to accept the hollow cylinder 22. A number of elliptical plates are provided at intervals inside the uppermost part of the lower handle part 16. Each of these elliptical plates is disposed across the tube at right angles to the axis of the elliptical tube. The circumference of each plate corresponds to the internal circumference of the tube. The uppermost three elliptical plates 34, 36, 38 are provided in their centre with a bore of similar dimensions to that provided in the uppermost end of the elliptical tube. The lower elliptical plates 40, 42, 44, 46, 48 are provided with a bore of similar size in their centre but the aperture in each case is extended by a slot 50 which extends radially from the centre of the plate to thereby form a keyhole shaped aperture in each of the lower plates 40, 42, 44, 46 and 48. Each of these slots is aligned to point in the same direction along the major axis of the elliptical cross-section. The length of each slot 50 is slightly greater than the length of the protruding stud 32 on the hollow cylinder 22 and the width of each slot 50 is also slightly greater than the diameter of the stud 32.

A substantially rectangular aperture is provided in the side of the uppermost section of the lower handle part at a first end of the major axis of the elliptical cross-section. This first end is opposite the end towards which the slots 50 are directed. The rectangular aperture is situated between the lowermost plate 38 of the upper plates 34, 36, 38 and the uppermost 40 of the lower plates 40, 42, 46, 48. The outer surface of the hollow tube is slightly raised round the rectangular aperture.

The release means 20 is situated in the gap between the lower plate 38 and the upper plate 40 and comprises: an oval ring section or saddle 52 through which the hollow cylinder 22 of the upper handle part 15 passes, the previously mentioned rectangular button 18 which is located in the rectangular aperture in the lower handle part 16, a pillar 54 which connects the inside of the button 18 to the ring section 52, and an inwardly pointing stud 56 which points inwardly from the inner surface of the ring section 52 and is located on the opposite side of the ring to the button 18 and pillar 54, and a helical spring 56 which is located between the outside of the ring section 52 opposite to the button 18 and the inner surface of the tube 16. The protruding stud 56 is of a length shorter than the length by which the helical spring 58 is compressed by the pressing of the button 18 and is of a diameter smaller than the bores 24, 26, 28, 30 provided in the hollow cylinder 22.

The spacing between the stud 32 on the hollow cylinder 22 and the bores 24, 26, 28, 36 is such that when the stud is located directly against the lower side of the lowermost plate 48, the inwardly facing stud 56 on the release means 20 is located at the same longitudinal position as the uppermost bore 30. The spaces provided between each of the lower four plates 42, 44, 46, 48 is very slightly greater than the diameter of the stud 32, and furthermore this spacing is equal to the spacing between the centres of the bores 24, 26, 38, 30.

The operation of the connection will now be described with reference to Figures 2, 3 and 4. In Figure 2, it will be seen that the inwardly protruding stud 56 on the release means 20 is engaged with the second uppermost bore 28 in the hollow cylinder 22 and hence the stud 32 on the hollow cylinder 22 is located in the gap between the lowermost plate 48 and the second lowermost plate 46. To adjust the length of the handle and/or alter the orientation of the trimmer head, the following procedure is followed.

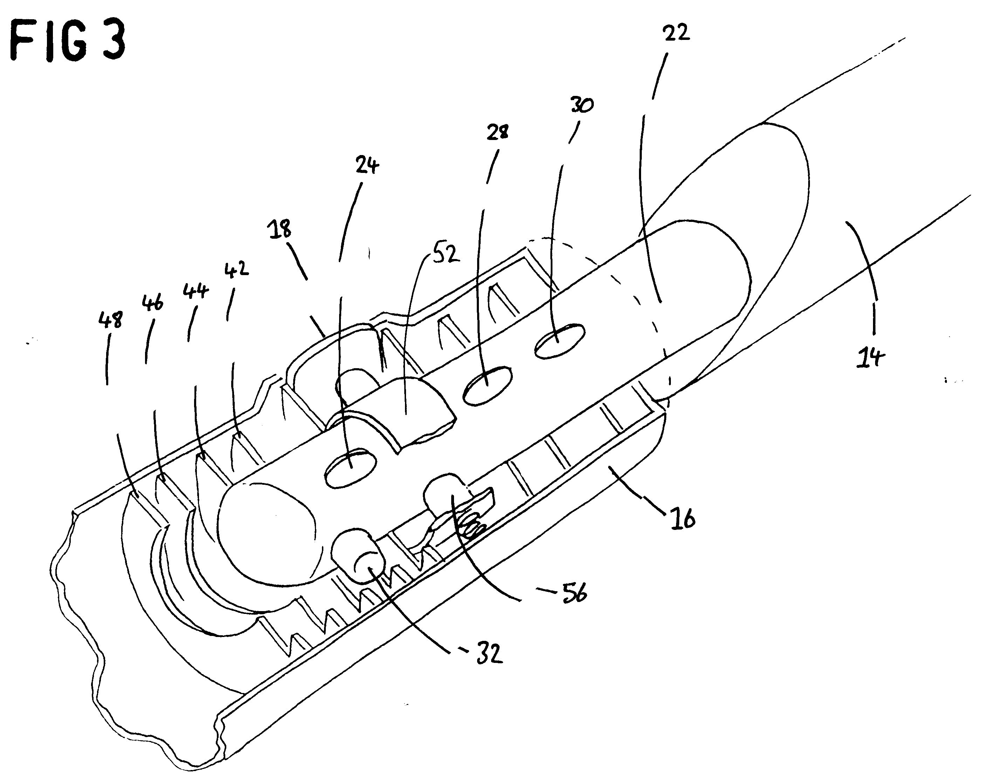

Firstly, the button 18 is depressed to remove the inwardly protruding stud 46 from the bore 28 whereupon rotation of the upper handle part 14 relative to the lower handle part 16 is enabled. As can be seen from Figures 2, 3 and 4 there is sufficient clearance between the ring section 52 and the cylinder 22 for the former to be moved sideways by the push button for enough to disengage the stud 56 from the bore 28. By rotating the upper handle part 14 by 90°, the stud 32 on the hollow cylinder 22 is aligned with the slots 50 in the lower plates 40, 42, 44, 46, 48. Once the stud 32 is so aligned, the upper handle part can then be pulled so as to move the hollow cylinder 22 outwardly from the lower handle part 16 to the position shown in Figure 3. It will be noted that as the hollow cylinder 22 is extracted from the lower handle part 16 the inwardly facing protrusion 56 on the release means 20 is no longer in the same longitudinal line as the bores 24, 26, 28, 30 and hence the button 18 may be released without fear of the protrusion 56 accidentally engaging one of the bores on the hollow cylinder before the upper and lower handle parts 14, 16 have been moved to their desired relative longitudinal positions.

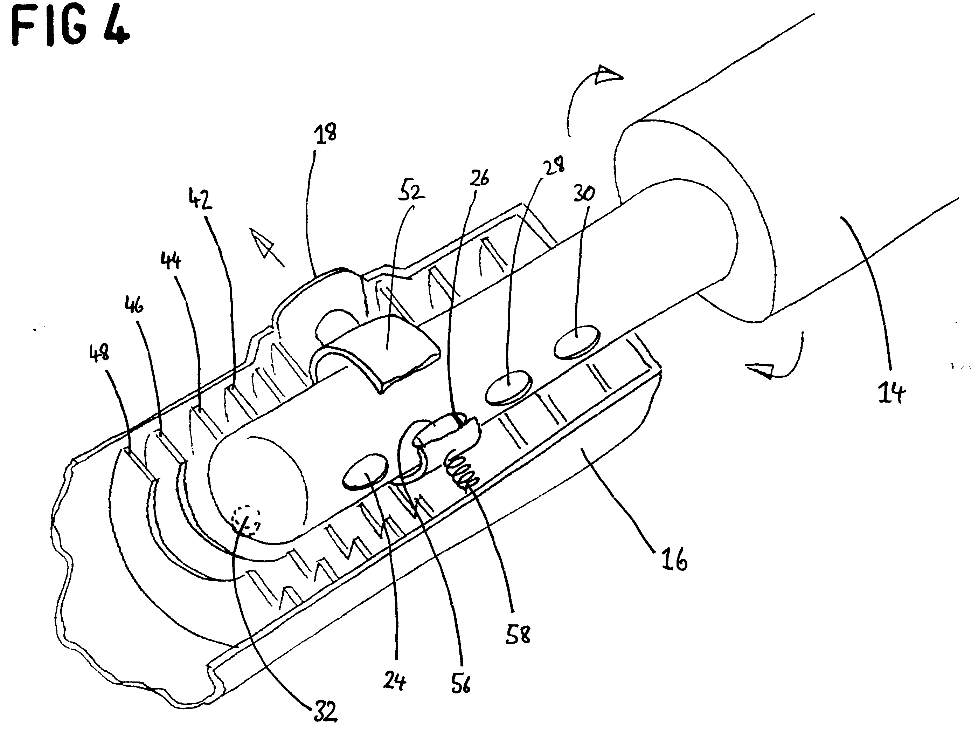

Once the stud 32 is located between the third lowermost plate 44 and the second lowermost plate 46, the upper handle part 14 may be rotated in the opposite sense to that in which it was originally rotated. This rotation brings the bore 26 back into radial alignment with the inwardly projecting stud 56 as shown in Figure 4. It will be realised that the guiding of the stud 32 between the plates 44 and 46 ensures that the inwardly projecting stud 56 is at the same longitudinal position as the bore 26 and hence ensures that when the upper handle part 14 is rotated the inwardly protruding stud 56 will engage with the bore 26. The button 18 may now be released to allow the inwardly projecting stud 56 to engage with the bore 26. It will be realised that the button may already have been released during the longitudinal movement of the upper handle part relative to the lower handle part 16. In that case, the release means 20 will urge the inwardly protruding stud 56 into the bore 26 as soon as the upper handle part 14 has been rotated by a sufficient amount to bring the inwardly protruding stud 56 and the bore 26 into alignment.

Since the bores 24, 26, 28, 30 extend right through the hollow cylinder 22 it will be appreciated that rather than turning the upper handle part 14 in the opposite sense to that in which it was originally turned as explained above, the upper handle part could be rotated a further 90° in the same direction in order to bring the protruding stud 56 into line with the bore 26 where it provides an aperture on the opposite side of the hollow cylinder 22. Hence, it will be seen how the connection allows the upper handle part to be moved by 180° relative to the lower handle part as well as allowing the longitudinal movement described above. As illustrated and described in relation to Figures 1A and 1B, this enables the operating head (which is integral with the lower handle part 16 and at an oblique angle thereto) to be moved from a cutting orientation relative to the orientation of the upper handle part 14 to an edging orientation to the upper handle part 14.

From the foregoing, it will be appreciated that the hand tool of the present invention as hereinbefore described enables both the orientation of the head of the strimmer and the length of the trimmer handle to be simply adjusted in a single operation enabled by pressing a single button to release a connection between the lower handle part and the upper handle part.

Furthermore, it will be appreciated from the foregoing that the hand tool of the present invention enables the orientation of the head of the hand tool to be altered without making the handling of the hand tool more awkward. Thus, it will be appreciated that the hand tool of the present invention can be used more safely than conventional hand tools.

Each feature disclosed in this specification (which term includes the claims) and/or shown in the drawings may be incorporated in the invention independently of other disclosed and/or illustrated features.

The appended abstract as filed herewith is included in the specification by reference.

## Claims

1. A hand tool having an adjustable connection between a first elongate handle part and a second coaxial elongate handle part, said connection being for maintaining the concentricity of the two parts whilst enabling relative longitudinal and rotational movement of the two parts, and comprising release means selectively operable to enable or prevent said relative movement;
one of said elongate parts including a male member (22) provided with a guiding protrusion (32);
the other of said elongate parts being provided with a series of longitudinally spaced plates (34, 36, 38, 40, 42, 44, 46, 48), each of said plates having a shaped aperture (50), the space between adjacent plates providing a lateral guide within which said guiding protrusion (32) turns about the longitudinal axis during said relative rotation, said shaped aperture (50) providing a longitudinal guide within which said guiding protrusion (32) is constrained to travel during said relative longitudinal movement.

2. A hand tool as claimed in Claim 1, wherein said longitudinal guide is such that one of said handle parts is rotated relative to the other of said handle parts to align said guiding protrusion (32) with said longitudinal guide to enable relative longitudinal movement.

3. An adjustable connection or a hand tool as claimed in Claim 1 or Claim 2, wherein the release means comprises an engagement means (56) attached to said other of said elongate members and a plurality of longitudinally spaced engageable means (24, 26, 28, 30) provided on said male member (22).

4. A hand tool as claimed in Claim 3, wherein said longitudinal guide is such that said engagement means (56) cannot engage said plurality of of longitudinally spaced engageable means (24, 26, 28, 30) during said relative longitudinal movement.

5. A hand tool as claimed in Claim 3 or Claim 4, wherein said plurality of longitudinally spaced engageable means (24, 26, 28, 30) comprises a plurality of spaced lateral bores extending through said male member (22).

6. A hand tool as claimed in any of Claims 3 to 5, wherein the release means comprise a saddle extending around the male member and comprising on one side a push button and on the other side said engagement means, depression of the push button radially inwardly of the male member causing radially outward movement of the engagement means and disengagement thereof from the engageable means.

7. A hand tool as claimed in any preceding claim comprising an operating head fixed for rotation with one said handle part, and defining a plane of operation of the apparatus, said one handle part being oblique to said plane of operation;
the other handle part having thereon hand grip means for manipulation of the hand tool;
said adjustable connection allowing said handle parts to be moved longitudinally relative to each other, whereby to vary the distance between the hand grips and the operating head.

8. A hand tool as claimed in Claim 7, wherein the hand grip means comprises a hand grip for each hand of the operator.

9. A hand tool as claimed in Claim 8, wherein the hand grips are in fixed spatial relation to each other.

10. A hand tool as claimed in any preceding claim , being a string trimmer.
